# EUROPEAN PATENT SPECIFICATION

(11) **EP 2 377 898 B1**
(45) Date of publication and mention of the grant of the patent: **12.12.2012**
(21) Application number: 10159806.8
(22) Date of filing: 13.04.2010
(51) Int. Cl.: C08K 3/22, C08K 9/06, C08G 18/72, C08J 3/22, C08J 5/18, C08L 75/04

(54) **Processing aid for thermoplastic polyurethanes**
Verarbeitungshilfe für thermoplastische Polyurethane
Adjuvant d'aide au traitement pour polyuréthanes thermoplastiques

(43) Date of publication of application: 19.10.2011
(73) Proprietor: Evonik Degussa GmbH, 45128 Essen (DE)
(72) Inventor: Welker, Thomas, 63454 Hanau (DE); Menzel, Frank, Dr., 63456 Hanau-Steinheim (DE); Kuhn, Dieter, 63517 Rodenbach (DE); Schachtely, Uwe, 63796 Kahl am Main (DE); Kinzlinger, Uwe, 63741 Aschaffenburg (DE); Boes, Ulrich, 60528 Frankfurt a.M. (DE); Lagneaux, Didier, 38290 Frontonas (FR); Sautel, Henri, 38290 Frontonas (FR)

(56) References cited:
- DE-A1- 4 339 475
- DE-A1- 19 706 380
- DATABASE WPI Week 200674 Thomson Scientific, London, GB; AN 2006-713287 XP002599529 & JP 2006 274000 A (DAINIPPON INK & CHEM INC) 12 October 2006 (2006-10-12)

## Description

The invention relates to a processing aid, which can be used when processing thermoplastic polyurethanes, and to its preparation and use. The invention furthermore relates to a process for the preparation of self-supporting films or sels-supporting blow molding hoses with the assistance of the processing aid.

Thermoplastic polyurethanes (TPU) are manufactured in large amounts and in a wide range of grades. This group of substances is in this connection, because of its good elastic properties, in combination with the possibility of thermoplastic moulding, its chemical resistance and its abrasion resistance particularly attractive. They are accordingly suitable, for example, for mechanically and thermally stressed coatings, hoses, pipes, profiles, wearing parts and other moulded articles.

Thermoplastic polyurethanes are formed from linear polyols, generally polyester or polyether polyols, organic diisocyanates and short-chain diols (chain extenders). Use may additionally be made of catalysts for accelerating the formation reaction. They are partially crystalline materials and belong to the class of thermoplastic elastomers. They are characterized by the segmented structure of the macromolecules into a crystalline (hard) region and into an amorphous (soft) region, which determines the properties of a thermoplastic polyurethane.

The hard and soft structural regions, which melt at very different temperatures and form a physical network at ambient temperature, and undesirable rheological properties of the TPU melt result in a complicated processing technique for the polyurethanes accompanied by an irreversible chain decomposition during the thermoplastic processing.

In order to overcome these disadvantages, it is proposed in the state of the art to introduce crosslinking into the thermoplastic polyurethane. As disclosed in WO 2005/054322, the formation of crosslinkages through addition of isocyanates to the molten thermoplastic polyurethane is known as prepolymer crosslinking. However, because of the complicated equipment, this process was unable hitherto to gain acceptance in practice. As explained further in WO 2005/054322, this concerns, inter alia, the difficulties in mixing the TPU, usually present as granules, as homogeneously as possible with the liquid or viscous compounds in which isocyanate groups are present.

In addition, the reaction of the thermoplastic polyurethane with the compounds in which isocyanate groups are present represents a difficult chemical problem since the mixing of the molten TPU with the prepolymer is usually carried out in an extruder, which can clog up if crosslinking is too fast or too dense.

The proposal is made, in WO2005/054322, to overcome these difficulties in the reaction of thermoplastic polyurethanes with compounds in which isocyanate groups are present by a process in which use is made of aliphatic isocyanates with at least three isocyanate groups and aromatic isocyanates with two isocyanate groups. This is supposed to make possible reliable process control. It is disadvantageous to the process that the handling problems and metering problems still continue to exist and the combination of difunctional and trifunctional isocyanates can be used for special thermoplastic polyurethanes but not universally.

The addition of diisocyanates to a thermoplastic polyurethane during the thermoplastic processing is not novel. It is explained, in DE-A-4115508, that this results in an improvement in the TPU properties.

DE-A 4112329 discloses a process in which the metering problems of the isocyanate added are supposed to be reduced by subjecting the starting TPU to swelling with a polyisocyanate which is liquid under the processing conditions.

WO 2006/128793 discloses a process in which a silicon dioxide obtained by a sol/gel process, a polyol and an isocyanate are reacted with formation of a thermoplastic polyurethane, the silicon dioxide being premixed with at least one of the starting materials. This should increase the flexibility of the polyurethane.

It is disadvantageous to the known process that it only partially solves the complex processing problems. Mention may be made here of the handling problems with isocyanates, metering problems, rheological problems during the processing, insufficient strength and insufficient tensile deformation and compressive set of the products.

It was an object of the present invention to provide a processing aid with which it is possible to influence the properties of existing TPUs in the thermoplastic moulding in such a way that these disadvantages no longer occur. It was furthermore an object of the invention to provide a process for the preparation of this composition.

A subject-matter of the invention is a processing aid comprising
a) 10-50% by weight of hydrophobized, at least partially aggregated, metal oxide particles
b) 20-75% by weight of one or more thermoplastic polyurethanes,
c) 0.5-50 by weight of one or more prepolymers comprising isocyanate groups
the sum of the constituents a) to c) amounting to at least 80% by weight, based on the processing aid.

The components of the processing aid are in this connection distributed as homogeneously as possible.

### a) Hydrophobized metal oxide particles

The hydrophobized metal oxide particles are, in the context of this invention, hydrophobized, at least partially aggregated, metal oxide particles preferably chosen from the group consisting of aluminium oxide, silicon dioxide and mixtures of the abovementioned metal oxides. Silicon dioxide is in this connection to be regarded as a metal oxide. The term "mixtures" comprises physical mixtures and chemical mixtures, in which the metal oxide components are mixed at the molecular level.

The term "hydrophobized metal oxide particles" is to be understood as meaning those which are obtained by reaction of a surface-modifying agent with reactive groups, e.g. hydroxyl groups, present on the surface of nonhydrophobized metal oxide particles.

The term "aggregated" is to be understood as meaning that "primary particles", produced first in the genesis of nonhydrophobized metal oxide particles, combine firmly together in the further course of the reaction with formation of a three-dimensional network. In contrast to agglomerates, these combinations can no longer be separated using conventional dispersing devices.

The description "at least partially aggregated" is to make it clear that the presence of aggregates is essential for the invention. The proportion of aggregates is preferably high in comparison with isolated individual particles that are at least 80% of the hydrophobized metal oxide particles are to be present in the form of aggregates, or the particles of metal oxide are present completely in aggregated form. The aggregate to isolated individual particle ratio can, for example, be determined by quantitative evaluation of TEM photographs (TEM = Transmission Electron Microscopy).

The hydrophobic metal oxide particles are amorphous in the case of silicon dioxide particles, crystalline in the case of aluminum oxide particles. In the case of mixed oxide particles the particles may show amorphous or crystalline behaviour, depending on the prevailing metal oxide.

Silanes, individually or as a mixture, can be used, for example, as surface-modifying agent. Mention may be made, by way of example, of:
organosilanes (RO)₃Si(CₙH₂ₙ₊₁) and (RO)₃Si(CₘH₂ₘ₋₁)
   with R = alkyl, such as methyl, ethyl, n-propyl, isopropyl or butyl,
   n = 1-20, m = 2-20;
organosilanes (R¹)ₓ(RO)_{y}Si(CₙH₂ₙ₊₁) and (R¹)ₓ(RO)_{y}Si(CₘH₂ₘ₋₁) with R = alkyl, such as methyl, ethyl, n-propyl, isopropyl or butyl; R¹ = alkyl, such as methyl, ethyl, n-propyl,
   isopropyl, butyl or cycloalkyl; n = 1-20; m 0 2-20; x+y = 3, x = 1, 2; y = 1, 2;
haloorganosilanes X₃Si(CₙH₂ₙ₊₁) and X₃Si(CₘH₂ₘ₋₁)
   with X = Cl, Br; n = 1-20; m = 2-20;
haloorganosilanes X₂(R)Si(CₙH₂ₙ₊₁) and X₂(R)Si(CₘH₂ₘ₋₁)
   with X = Cl, Br, R = alkyl, such as methyl, ethyl, n-propyl, isopropyl, butyl or cycloalkyl; n = 1-20; m = 2-20;
haloorganosilanes X(R)₂Si(CₙH₂ₙ₊₁) and X(R)₂Si(CₘH₂ₘ₋₁)
   with X = Cl, Br; R = alkyl, such as methyl, ethyl, n-propyl, isopropyl, butyl or cycloalkyl; n = 1-20; m = 2-20;
organosilanes (RO)₃Si(CH₂)ₘ-R¹
   with R = alkyl, such as methyl, ethyl or propyl; m = 0,1-20; R¹ = methyl, aryl, such as -C₆H₅, substituted phenyl radicals, C₄F₉, OCF₂-CHF-CF₃, C₆F₁₃, OCF₂CHF₂ or Sₓ-(CH₂)₃Si(OR)₃;
organosilanes (R₂)ₓ(RO)_{y}Si(CH₂)ₘ-R¹
   with R¹ = methyl, aryl, such as C₆H₅, substituted phenyl radicals, C₄F₉, OCF₂-CHF-CF₃, C₆F₁₃, OCF₂CHF₂, Sₓ-(CH₂)₃Si(OR)₃, SH, NR³R⁴R⁵, with R³ = alkyl or aryl; R⁴ = H, alkyl or aryl; and R⁵ = H, alkyl, aryl or benzyl, or C₂H₄NR⁶R⁷, with R⁶ = H or alkyl and R⁷ = H or alkyl; R² = alkyl; x+y=3; x=1,2; y=1,2; m=0,1 to 20;
haloorganosilanes X₃Si(CH₂)ₘ-R
   with X = Cl, Br; R = methyl, aryl, such as C₆H₅, substituted phenyl radicals, C₄F₉, OCF₂-CHF-CF₃, C₆F₁₃, O-CF₂-CHF₂, Sₓ-(CH₂)₃Si(OR¹)₃, in which R¹ = methyl, ethyl, propyl, butyl and x = 1 or 2, or SH; m = 0,1-20;
haloorganosilanes R¹X₂Si(CH₂)ₘR²
   with X = Cl, Br; R¹ = alkyl, such as methyl, ethyl or propyl; R² = methyl, aryl, such as C₆H₅, substituted phenyl radicals, C₄F₉, OCF₂-CHF-CF₃, C₆F₁₃, O-CF₂-CHF₂,
   -OOC (CH₃) C=CH₂, -Sₓ-(CH₂)₃Si(OR³)₃, in which R³ = methyl, ethyl, propyl or butyl and x = 1 or 2, or SH; m = 0,1-20;
haloorganosilanes (R¹)₂XSi(CH₂)ₘR²
   with X = Cl, Br; R¹ = alkyl, such as methyl, ethyl or propyl; R² = methyl, aryl, such as C₆H₅, substituted phenyl radicals, C₄F₉, OCF₂-CHF-CF₃, C₆F₁₃, O-CF₂-CHF₂, -Sₓ-(CH₂)₃Si(OR³)₃, in which R³ = methyl, ethyl, propyl or butyl and x = 1 or 2, or SH; m = 0,1-20;
silazanes R²R¹₂SiNHSiR¹₂R² with R¹ and R² = alkyl, vinyl or aryl;
cyclic polysiloxanes D3, D4, D5 and their homologues, in which D3, D4 and D5 are to be understood as meaning cyclic polysiloxanes with 3, 4 or 5 units of the -O-Si(CH₃)₂ type, e.g. octamethylcyclotetrasiloxane = D4;
polysiloxanes or silicone oils of the type Y-O-[(R¹R²SiO)ₘ-(R³ R⁴SiO)ₙ]ᵤ-Y, with
R¹, R², R³ and R⁴ are, independently of one another, alkyl, such as CₙH₂ₙ₊₁,
n = 1-20; aryl, such as phenyl radicals and substituted phenyl radicals, (CH₂)ₙ-NH₂ or H;
Y = CH₃, H, CₒH₂ₒ₊₁, n = 2-20; Si(CH₃)₃, Si(CH₃)₂H, Si(CH₃)₂OH,
   Si(CH₃)₂(OCH₃), Si(CH₃)₂(CₒH₂ₒ₊₁), o = 2-20,
m = 0, 1, 2, 3, ... ∞, preferably 0, 1, 2, 3, ... 100 000,
n = 0, 1, 2, 3, ... ∞, preferably 0, 1, 2, 3, ... 100 000,
u = 0,1,2,3, ....∞, preferably 0, 1, 2, 3, ... 100 000.

Commercially available products are, for example, Rhodorsil® Oils 47 V 50, 47 V 100, 47 V 300, 47 V 350, 47 V 500 or 47 V 1000, Wacker Silicon Fluids AK 0.65, AK 10, AK 20, AK 35, AK 50, AK 100, AK 150, AK 200, AK 350, AK 500, AK 1000, AK 2000, AK 5000, AK 10000, AK 12500, AK 20000, AK 30000, AK 60000, AK 100000, AK 300000, AK 500000 or AK 1000000, or Dow Corning® 200 Fluid.

Use may preferably be made, as surface-modifying agents, of those which result in the hydrophobized metal oxide particles carrying, on their surface, the group

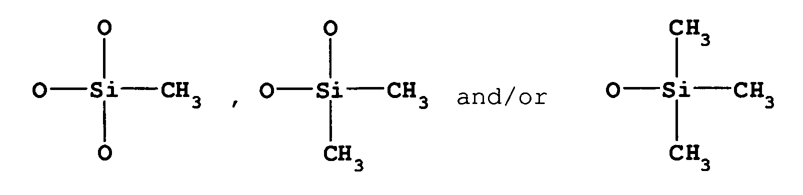

The detection of these groups can be carried out spectroscopically and is known to a person skilled in the art.

Those hydrophobized metal oxide particles prepared by means of pyrogenic processes are to be regarded as particularly suitable. These pyrogenic processes include flame hydrolysis and flame oxidation. In this connection, oxidizable and/or hydrolysable starting materials are generally oxidized or hydrolysed in a hydrogen/oxygen flame. Organic and inorganic materials can be used as starting materials for pyrogenic processes. Aluminium chloride and silicon tetrachloride are particularly suitable. The metal oxide particles thus obtained are to the greatest extent possible free from pores and exhibit free hydroxyl groups on the surface.

These are, as described further above, partially or completely reacted in a subsequent stage with a surface-modifying agent, resulting in the particles obtaining their hydrophobic properties. The degree of surface modification can be characterized by parameters such as methanol wettability or the density of OH groups. The determination of these parameters is known to a person skilled in the art.

In the context of the present invention, it has proven to be advantageous for the density of OH groups of the hydrophobized metal oxide particles to be equal to or less than 1.0 OH/nm² (determination according to J. Mathias and G. Wannemacher, Journal of Colloid and Interface Science, 125 (1988) by reaction with lithium aluminium hydride).

Hydrophobized aggregated silicon dioxide particles of pyrogenic origin as a powder or granules are very particularly suitable. Those powders commercially available as "R-Aerosil®" types (Evonik Degussa) are represented in Table 1 by way of example.

According to the invention, the proportion of hydrophobized metal oxide particles is from 10 to 50% by weight and preferably from 20 to 40% by weight, based on the processing aid.

Because of the isocyanate comprising prepolymer present in the processing aid according to the invention, the proportion of water in and on the hydrophobized metal oxide particles should be minimal. Generally, it should be less than 1% by weight, ideally less than 0.5% by weight, in each case based on the processing aid.

Structurally modified types can also be used. The structural modification can be carried out by mechanical action and by optional remilling. The structural modification can, for example, be carried out with a bead mill or a continuously operating bead mill. The remilling can be carried out, for example, by means of an air jet mill, toothed disc mill or pin mill.

However, the best results in terms of workability were obtained using compacted types that are not structurally modified. These compacted types usually have a tapped density, determined according to DIN ISO 787/11, JIS 5101(not sieved), of 60 to 100, preferably 70 to 90 g/l.

### b) Thermoplastic polyurethane

All thermoplastic polyurethanes known to a person skilled in the art are suitable in principle for the processing aid according to the invention.

These are generally obtained by reaction of a diisocyanate with an OH-terminated polyester or an OH-terminated polyester with one or more compounds acting as chain extenders.

Polyesters generally used are linear polyesters with an average molecular weight (Mₙ) of 500 to 10 000, preferably of 700 to 5000 and particularly preferably of 800 to 4000.

The polyesters are obtained by esterification of one or more glycols with one or more dicarboxylic acids or the anhydrides thereof. In this connection, the dicarboxylic acids can be aliphatic, cycloaliphatic or aromatic. Suitable dicarboxylic acids are, for example, succinic acid, glutaric acid, adipic acid, pimelic acid, azelaic acid, sebacic acid, dodecanedicarboxylic acid, isophthalic acid, terephthalic acid or cyclohexanedicarboxylic acid. These polyesters can also be bio based or made by petrol synthesis.

Suitable glycols are, for example, ethylene glycol, 1,2-propanediol, 1,3-propanediol, 1,3-butanediol, 1,4-butanediol, 1,5-pentanediol, 1,6-hexanediol, 2,2-dimethyl-1,3-propanediol, 1,4-cyclohexanedimethanol, decamethylene glycol or dodecamethylene glycol.

OH-terminated polyethers are obtained by reaction of a diol or polyol, preferably an alkanediol or glycol, with an ether comprising alkylene oxides with 2 to 6 carbon atoms, typically ethylene oxide.

Suitable chain extenders are, for example, aliphatic glycols with 2 to 10 carbon atoms, such as ethylene glycol, diethylene glycol, propylene glycol, dipropylene glycol, 1,4-butanediol, 1,6-hexanediol, 1,3-butanediol, 1,5-pentanediol, 1,4-cyclohexanedimethanol or neopentyl glycol.

The third component of a thermoplastic polyurethane is an isocyanate. The isocyanate may be an aromatic, aliphatic, cycloaliphatic and/or araliphatic isocyanate, preferably a diisocyanate. Mention may be made, by way of example, of 2,2'-diphenylmethane diisocyanate, 2,4'-diphenylmethane diisocyanate, 4,4'-diphenylmethane diisocyanate (MDI), 1,5-naphthylene diisocyanate (NDI), 2,4-toluylene diisocyanate, 2,6-Toluylene diisocyanate (TDI), 3,3'-dimethyldiphenyl diisocyanate, 1,2-diphenylethane diisocyanate, phenylene diisocyanate, trimethylene diisocyanate, tetramethylene diisocyanate, pentamethylene diisocyanate, hexamethylene diisocyanate, heptamethylene diisocyanate, octamethylene diisocyanate, 2-methylpentamethylene-1,5-diisocyanate, 2-ethyl-butylene-1,4-diisocyanate, pentamethylene-1,5-diisocyanate, butylene-1,4-diisocyanate, 1-isocyanato-3,3,5-trimethyl-5-isocyanatomethyl-cyclohexane (isophorone diisocyanate, IPDI), 1,4-bis(isocyanatomethyl)cyclohexane, 1,3-bis(isocyanatomethyl)cyclohexane (HXDI), 1,4-cyclohexane diisocyanate, 1-methyl-2,4-cyclohexane diisocyanate, 1-methyl-2,6-Dicyclohexylmethane diisocyanate, 4,4'-dicyclohexylmethane diisocyanate (H12MDI), 2,4'-dicyclohexylmethane diisocyanate and/or 2,2'-dicyclohexylmethane-diisocyanate, wheras 2,2'-diphenylmethane diisocyanate, 2,4'-diphenyimethane diisocyanate, 4,4'-Diphenylmethane diisocyanate, 1,5-naphthylene diisocyanate, 2,4-toluylene diisocyanate, 2,6-toluylene diisocyanate, hexamethylene diisocyanate and/or IPDI are the preferred ones.

In addition to thermoplastic polyurethanes based on polyesters and polyethers, polyurethanes based on polycarbonates can also be present in the processing aid according to the invention. These can be prepared by reaction of diisocyanates with OH-terminated polycarbonates in the presence of a chain extender.

Commercially available thermoplastic polyurethanes are, for example, the Desmopan® types from Bayer, the Estane® types from Lubrizol or the Elastollan® types from BASF.

The proportion of thermoplastic polyurethane according to the invention is from 20 to 75% by weight, preferably from 30 to 60% by weight and particularly preferably from 40 to 50% by weight, in each case based on the processing aid.

### c) Prepolymer comprising isocyanate groups

According to the invention an prepolymer comprising isocyanate groups is a prepolymer that can be obtained by reacting an excess of one or more polyisocyanates (A) and towards polyisocyanates reactive compounds, e.g. polyether or polyester polyols (B).

The polyisocyanates (A) can be selected from the group consisting of aliphatic polyisocyanates, cycloaliphatic polyisocyanates, aromatic polyisocyanates and mixtures thereof, the polyisocyanate preferably being a diisocyanate. Examples are 4,4', 2,4' und 2,2'-Diphenylmethane diisocyanate, mixtures of moomeric diphenylmethane diisocyanates and the higher homologues of monomeric MDI (Polymer-MDI), tetramethylene diisocyanate, hexamethylene diisocyanate (HDI), isophorone diisocyanate (IPDI), 1,5-naphthalene diisocyanate (NDI), 2,4,6-toluene trisocyanate und 2,4- und 2,6-toluene diisocyanate (TDI).

The reactive compounds (B) are compounds bearing at least two hydrogen atoms that are reactive towards isocyanate groups. Preferably the reactive compouds (B) are selected from at least one of the group consisting of polyesterols, polyetherols, mixtures of polyetherols and polyols bearing a tertiary amino group.

Most preferred prepolymers are selected from the group consisting of MDI-terminated polyether prepolymers, e.g. based on polypropylene ether glycol or polytetramethylene ether glycol, MDI-terminated polyester prepolymers; HDI-terminated polyether prepolymers, HDI-terminated polyester prepolymers, HDI-terminated polycaprolactone prepolymers, HDI-terminated polycarbonate prepolymers; TDI-terminated polyether prepolymer, TDI-terminated polyester prepolymers; HMDI-terminated polyether prepolymer, e.g. based on polypropylene ether glycol or polytetramethylene ether glycol.

The prepolymer of the processing aid according to the invention is a prepolymer comprising isocyante groups. The content of the prepolymer preferably is in a range of 2 to 35 wt.-% and more preferably 10 to 30 wt.-%.

The NCO-content of the prepolymer preferably is from 1 to 35 % and most preferably form 2 to 10 %.

The processing aid according to the invention can comprise one or more non prepolymeric isocyanates, like MDI, TDI or IPDI, that are used as starting material in the process of making the prepolymer and represent a byproduct of prepolymer. The non-polymeric isocyante may als be added to the processing aid as individual compound. The content of free non prepolymeric isocyanate preferably is less than 5%, more preferably less than 1%.

The isocyanate can be an aromatic or an aliphatic one. Aliphatic or aromatic diisocyanates and aliphatic or aromatic triisocyanates are preferably involved. Mention may be made, by way of example, of 4,4'-methylenebis(phenyl isocyanate) (MDI), m-xylylene diisocyanate (XDI), phenylene 1,4-diisocyanate, naphthalene 1,5-diisocyanate, 3,3'-dimethoxydiphenylmethane 4,4'-diisocyanate and toluene diisocyanate (TDI), or aliphatic diisocyanates, such as isophorone diisocyanate (IPDI), 4,4'-dicyclohexylmethane diisocyanate (H₁₂MDI), hexamethylene diisocyanate, 1,4-cyclohexane diisocyanate (CHDI), decane 1,10-diisocyanate and dicyclohexylmethane 4,4'-diisocyanate. Preference may be given to 4,4'-methylenebis(phenyl isocyanate) (MDI) or uretonimine modified MDI. Commercially available products are for example Desmodur^{®} CD, Bayer or Suprasec^{®} 2020, Huntsman.

The proportion of isocyanate in the processing aid according to the invention preferably can be up to 5 wt.-%, more preferably it can be 0 to 3 wt.-%.

The processing aid according to the invention furthermore can comprise one or more lubricants, dispersants and/or plasticizers. These may act as friction-reducing internal and external lubricant and improves the flow properties during the preparation of the processing aid. In addition, it may reduce or prevent adhesion to the surrounding material. Finally, it may act as dispersant for the hydrophobized metal oxide particles.

The lubricant and dispersant can preferably be chosen from the group consisting of an ester or amide of aliphatic carboxylic acids or carboxylic acid salts with in each case from 10 to 45 carbon atoms.

Mention may in particular be made of fatty acid derivatives, such as stearic acid ester, fatty acid amides, such as stearic acid amide, and fatty acid ester amides, such as stearic acid amide alkyl stearates. Typical examples may be: methylene bislauramide, methylene bismyristamide, methylene bispalmitamide, methylene bisstearamide, methylene bisbehenamide, methylene bisoleamide, ethylene bislauramide, ethylene bismyristamide, ethylene bispalmitamide, ethylene bisstearamide, ethylene bisbehenamide, ethylene bismontanamide and ethylene bisoleamide.

It has in particular been confirmed that fatty acid amides and hydrophobized pyrogenically prepared silicon dioxide particles result in an exceptional stabilizing of the melt in the preparation of the processing aid and in the use of the processing aid in the processing of thermoplastic polyurethanes.

It is furthermore possible to use compounds bearing a polyester polysiloxane block copolymer, preferably a polyester-polysiloxane-polyester triblock copolymer. This comprises for example polycaprolactone-polydimethysiloxane-polycaprolactone triblock copolymers. A commercially available member of this group is TEGOMER^{®} H-Si 6440 P, Evonik Goldschmidt.

The plasticizer can be preferably one or more compound from the group consisting of sebacates, adipates, gluterates, phthalates, azelates and benzoates.

A plasticizer may reduce melt viscosity, lower the second order transition or elastic modulus of the material. They are often based on esters of polycarboxylic acids with linear or branched aliphatic alcohols of moderate chain length.

Phthalate-based plasticizers could be Bis(2-ethylhexyl) phthalate (DEHP), Diisononyl phthalate (DINP), Bis(n-butyl)phthalate (DnBP, DBP), Butyl benzyl phthalate (BBzP), Diisodecyl phthalate (DIDP), Di-n-octyl phthalate (DOP or DnOP), Diisooctyl phthalate (DIOP), Diethyl phthalate (DEP), Diisobutyl phthalate (DIBP), Di-n-hexyl phthalate. Adipate-based plasticizers could be Bis(2-ethylhexyl)adipate (DEHA), Dimethyl adipate (DMAD), Monomethyl adipate (MMAD), Dioctyl adipate (DOA).

A commercially available plasticizer of Isodecyl Diphenyl Phosphate is SANTICIZER® 148, Ferro.

The proportion of lubricant, dispersant and/or plasticizer in the processing aid according to the invention can be from 0,5 to 15% by weight for each one of them, preferably from 2 to 12,5% by weight, most preferably from 5 to 10% by weight, in each case based on the processing aid.

The processing aid according to the invention is a universal processing aid for the processing of thermoplastic polyurethanes, i.e. hydrophobized metal oxide particles, thermoplastic polyurethane, prepolymer comprising isocyante groups and optionally lubricant, dispersant and/or plasticizer can be combined in any way.

In a preferred embodiment of the invention, the processing aid comprises
a) from 20 to 40% by weight of hydrophobized pyrogenic silicon dioxide particles,
b) from 30 to 60% by weight of thermoplastic polyurethane,
c) from 5 to 20% by weight of isocyanate group comprising prepolymer,
d) from 5 to 10% by weight of lubricant, dispersant and/or plasticizer, in each case based on the processing aid,
these constituents representing at least 90%, preferably at least 95% by weight of the processing aid or the processing aid consisting exclusively of these constituents.

In this connection, any materials additionally present in the commercially available thermoplastic polymers are to be regarded as part of the thermoplastic polymer.

An additional subject-matter of the invention is a process for the preparation of the processing aid, in which a mixture of a melt of a thermoplastic polyurethane and hydrophobized metal oxide particles and one or more prepolymers comprising isocyanate groups, optionally one ore more polyisocyanates and optionally one or more lubricants, dispersants and/or plasticizers are metered into an extruder or an injection-moulding device.

An extruder may preferably be used. Advantageously, the metering is carried out in such a way that the thermoplastic polyurethane and the hydrophobized metal oxide particles are first mixed, the mixture is heated to temperatures at which the thermoplastic polyurethane is present in the molten form and the prepolymer comprising isocyanate groups and optionally the lubricant, dispersant and/or plasticizer are metered into this mixture in the extruder at a later point in time.

Extruders known to a person skilled in the art may be used. The temperature of the melt is usually from 150°C to 240°C, preferably from 180°C to 230°C. The processing aid obtained is subsequently cooled and granulated or cooled on granulating.

The thermoplastic polyurethane can be used in the process according to the invention in the form of granules or pellets, preferably as granule. The hydrophobized metal oxide particles can be used as powder or granule.

The use of the processing aid according to the invention in the processing of thermoplastic polyurethanes results in an increased stability of the melt, in an increased rate of crystallization, in a reduction in friction and in an increase in the molecular weight. Accordingly, an additional subject-matter of the invention is the use of the processing aid in the processing of thermoplastic polyurethanes to give films, hoses, cable sheathings, injection mouldings, e.g. bottles or automotive parts, or fibres.

The processing aid according to the invention is suitable in particular for the preparation of self-supporting blown films. The term "self-supporting" is understood as meaning that no supporting body is used in the preparation of the film.

Accordingly, an additional subject-matter of the invention is a process for the preparation of self-supporting films, in which a mixture of a thermoplastic polyurethane and from 0.5 to 35% by weight, preferably from 1 to 20% by weight and most preferably from 5 to 15% by weight, in each case based on the total amount of thermoplastic polyurethane, of the processing aid according to the invention is metered into an extruder and the mixture is melted and extruded via a film blowing die to give a film.

Another subject of the invention is a process for the preparation of self-supporting blow molding hoses, characterized in that a mixture of a thermoplastic polyurethane and from 0.5 to 35 by weight, based on the thermoplastic polyurethane, of the processing aid is metered into an extruder and the mixture is melted and extruded via blow molding hoses, e.g. to make car hoses or bottles.

### Examples

### Starting Materials

- Acrawax^{®} E: Ethylene bisstearamid, Lonza
- Adiprene^{®} LFM-500, Chemtura
- AEROSIL^{®} R972 and R974, Evonik Degussa
- Desmopan^{®} W85085A: aliphatic TPU based on polyesteretherpolyols
- Desmopan^{®} 786E, 3660D and 9392A, Bayer
- Elastolan C85, BASF
- Estane^{®} 58271: an 85A aromatic polyester based TPU, Lubrizol
- Estane^{®} 58300: an 82A aromatic polyether based TPU, Lubrizol
- Ethylenbisoleamid (EBO): CRODA EBO
- Licowax^{®} E, Clariant; esters of montanic acids with ethylene glycol or glycerine
- PEARLCOAT^{®} 125K : an 85A aromatic polyester based TPU, Merquinsa
- Prepolymer LU-D, LU-T, Baulé
- Phosflex^{®} 392, ILC Industrial
- Santicizer^{®} 148, Ferro
- Suprasec^{®} MDI, Huntsman
- Tegomer^{®} H-SI 6440P: polyester-polysiloxan-polyester-block copolymer, Evonik Goldschmidt
- Vestanat^{®} 1890-100: cycloaliphatic polyisocyanate based on IPDI, Evonik Degussa

### A) Preparation of Processing Aids according to the invention

Example 1: A mixture of 50 parts by weight of Estane^{®} 58271, Lubrizol, and 30 parts by weight of Aerosil® R974, Evonik Degussa, are metered into a twin-screw extruder operated at a screw speed of 400 rev/min and at a temperature of 160°C to 200°C. Subsequently 15 parts by weight of prepolymer LU-D and 5 parts by weight of Phosflex^{®} are metered in. The mixture is subsequently granulated.

Examples 2 to 4 are carried out analogously. Starting materials and amounts used are represented in Table 3.

### B) Preparation of self-supporting blown films

Example 5: The thermoplastic polyurethane Estane® 58447, Lubrizol, and 10 parts by weight, based on the thermoplastic polyurethane, of the processing aid according to the invention from Example 1 are melted in an extruder and extruded through a film blowing die to give a tubular film.

Example 6: Analogously to Example 5 but using Desmopan® 786E, Bayer, instead of Estane® 58447.

Example 7: Analogously to Example 5 but using Desmopan® 3660D, Bayer, instead of Estane® 58447.

### C) Preparation of self-supporting blow molding hoses

Example 8: The thermoplastic polyurethane Desmopan® 9392A, Bayer, and 5 parts by weight, based on the thermoplastic polyurethane, of the processing aid according to the invention from Example 1 are melted in an extruder and extruded by blow molding hoses to make car hoses.

Example 9: The thermoplastic polyurethane Elastolan C85, BASF, and 8 parts by weight, based on the thermoplastic polyurethane, of the processing aid according to the invention from Example 1 are melted in an extruder and extruded by blow molding hoses to make bottles.

It is known to a person skilled in the art that the thermoplastic polyurethanes used in Examples 5 to 7 can be processed only with difficulty or cannot by processed at all to give self-supporting films. With the help of the processing aid according to the invention from Example 1, this is successful in all three examples.

In the presence of the processing aid according to the invention, an approximately 15°C higher processing temperature can moreover be chosen, whereby die drooling (the dropping of melt down onto the nozzle) and the presence of unmelted thermoplastic polymer can be reduced or avoided. The presence of the processing aid according to the invention results in an increase in the tensile strength together with a reduction in the elongation.

**Table 1: Hydrophobized silicon dioxide particles**

| AEROSIL® | BET surface area | Loss on drying | pH | Carbon |
|---|---|---|---|---|
| | m²/g | % by weight | | % by weight |
| R 972 | 110 ± 20 | < 0.5 | 3.6 - 4.4 | 0.6 - 1.2 |
| R 974 | 170 ± 20 | < 0.5 | 3.7 - 4.7 | 0.7 - 1.3 |
| R 104 | 150 ± 25 | - | > 4.0 | 1.0 - 2.0 |
| R 106 | 250 ± 30 | - | > 3.7 | 1.5 - 3.0 |
| R 202 | 100 ± 20 | < 0.5 | 4.0 - 6.0 | 3.5 - 5.0 |
| R 805 | 150 ± 25 | < 0.5 | 3.5 - 5.5 | 4.5 - 6.5 |
| R 812 | 260 ± 30 | < 0.5 | 5.5 - 7.5 | 2.0 - 3.0 |
| R 816 | 190 ± 20 | < 1.0 | 4.0 - 5.5 | 0.9 - 1.8 |
| R 7200 | 150 ± 25 | < 1.5 | 4.0 - 6.0 | 4.5 - 6.5 |
| R 8200 | 160 ± 25 | < 0.5 | > 5.0 | 2.0 - 4.0 |
| R 9200 | 170 ± 20 | < 1.5 | 3.0 - 5.0 | 0.7 - 1.3 |

| | | | | |
|---|---|---|---|---|
| a) following DIN 66131; b) following DIN/IS0787/2, ASTM D 280, JIS K 5101/21; c) following DIN/IS0787/9, ASTM D 1208, JIS K 5101/24; in 1:1 methanol:water (proportions by volume) | | | | |

**Table 2: Commercially available Prepolymers**

| | **Name** | **Chemical Characterization** | **NCO (%)** |
|---|---|---|---|
| 1¹⁾ | MP102 | MDI Prepolymer | 23 |
| 2 | No. 259 Isocyanate | Monomeric MDI Prepolymer | 23 |
| 3 | LU-D | TDI-Ester | 2.3 - 5.2 |
| 4 | LU-T | TDI-PTMEG | 2.3 - 9.2 |
| 5 | MP-030 | (MDI)-terminated polyether prepolymer based on PPG²⁾ | 3.5 - 4.1 |
| 6 | ME-050 | (MDI)-terminated polyether prepolymer based on PTMEG³⁾ | 5.65 - 6.04 |
| 7 | MS-041 | (MDI)-terminated polyester prepolymer | 4.40 - 4.60 |
| 8 | TE 26 | (TDI)-terminated polyether prepolymer | 2.35 - 2.85 |
| 9 | TS 35 | (TDI)-terminated polyester prepolymer | 3.25 - 3.75 |
| 10 | LFM 2450 | MDI prepolymer | 4.35 - 4.55 |
| 11 | LFM 500 | MDI-terminated polyether prepolymer | 4.65 - 5.18 |
| 12 | LFH 120 | HDI-terminated polyether prepolymer | 11.54 - 12.30 |
| 13 | LFH 710 | HDI isocyanate-terminated polyether prepolymer | 6.8 - 7.4 |
| 14 | LFH 1570 | HDI diisocyanate-terminated polyester prepolymer | 5.3 - 6.0 |
| 15 | LFH 3520 | HDI isocyanate-terminated polycarbonate prepolymer | 5.6 - 6.4 |
| 16 | LFH 2840 | HDI diisocyanate-terminated polycaprolactone prepolymer | 8.2 - 8.6 |
| 17 | MP 100 | Prepolymer based on diphenylmethane diisocyanate | 10.2 |
| 18 | MP 101 | Polyurethane Prepolymer | 9.5 |
| 19 | MP 102 | Polyurethane Prepolymer | 10.6 |
| 20 | MP 103 | Prepolymer based on diphenylmethane diisocyanate | 16.7 |
| 21 | MP 104 | Polyurethane Prepolymer | 16 |
| 22 | MP 105 | Polyurethane Prepolymer | 28 |
| 23 | MP 106 | Polyurethane Prepolymer | 18 |
| 24 | MP 107 | Polyurethane Prepolymer | 23.5 |
| 25 | MP 108 | Polyurethane Prepolymer | 26.2 |
| 26 | MP 109 | Prepolymer modified isocyanate | 28.5 |
| 27 | MC 400 | Polyurethane Prepolymer | 10.2 |
| 28 | MC 401 | Polyurethane Prepolymer | 16.3 |
| 29 | MDI 25-1200 | MDI-polyisocyanate, prepolymer | 25 |
| 30 | MDI 22-1500 | MDI-polyisocyanate, prepolymer | 22 |
| 31 | MDI 15-10000 | MDI-polyisocyanate, prepolymer | 15 |

| | | | |
|---|---|---|---|
| 1) Entries 1-2: BASF Lupranate^{®}; entries 3-4: BAULE; entries 5-9: Bayer BAYTEC^{®}; entries 10-16: Chemtura Adiprene^{®}; entries 17-28: DOW ECHELON™; entries 29-31: Reima Chemicals ISOCURE; 2) polypropylene ether glycol; 3) polytetramethylene ether glycol; | | | |

**Table 3: Processing aid - Starting materials**

| **Example** | **1** | **2** | **3** | **4** |
|---|---|---|---|---|
| TPU | Estane^{®} 58271 | PEARLCOAT^{®} 125K | Estane^{®} 58300 | Desmopan^{®} W85085A |
| % by weight | 50 | 40 | 40 | 30 |
| Hydrophobized metal oxide particles | AEROSIL^{®} R974 | AEROSIL^{®} R972 | AEROSIL^{®} R974 | AEROSIL^{®} R974 |
| % by weight | 30 | 20 | 25 | 40 |
| Isocyanate Prepolymer | LU-D | LU-T | Adiprene^{®} LFM-500 | Vestanat^{®} 1890 |
| % by weight | 15 | 30 | 25 | 26 |
| Isocyanate | - | - | - | Suprasec^{®} MDI |
| % by weight | - | - | - | 2 |
| Lubricant, dispersant, plasticizer | Phosflex^{®} 362 / EBO | Santicizer^{®} 148 / EBO | EBO/ Tegomer^{®} H-Si6440P | EBO/ Acrawax E |
| % by weight | 5 | 10 | 10 | 2 |

## Claims

1. Processing aid comprising
a) 10-50% by weight of hydrophobized, at least partially aggregated, metal oxide particles
b) 20-75% by weight of one or more thermoplastic polyurethanes,
c) 0.5-50 by weight of one or more prepolymers comprising isocyanate groups
the sum of the constituents a) to c) amounting to at least 80% by weight, based on the processing aid.

2. Processing aid according to Claim 1,
**characterized in that**
it further comprises up to 5 wt% of one or more polyisocyanates.

3. Processing aid according to Claim 1 or 2,
**characterized in that**
it further comprises up to 15% by weight of one or more compounds selected from the group consisting of lubricants, dispersants and/or plasticizer.

4. Processing aid according to Claims 1 to 3,
**characterized in that**
the hydrophobized metal oxide particles are hydrophobized silicon dioxide particles.

5. Process for the preparation of the processing aid according to Claim 1 to 4,
**characterized in that**
a mixture of a melt of a thermoplastic polyurethane and hydrophobized metal oxide particles and one or more prepolymers comprising isocyanate groups, optionally one ore more isocyanates and optionally one or more lubricants, dispersants or plasticizers are metered into an extruder or an injection-moulding device.

6. Use of the processing aid according to Claims 1 to 4 in the processing of thermoplastic polyurethanes to give films, hoses, cable sheathings, injection mouldings or fibres.

7. Process for the preparation of a self-supporting film, **characterized in that** a mixture of a thermoplastic polyurethane and from 0.5 to 35 by weight, based on the thermoplastic polyurethane, of the processing aid according to Claims 1 to 4 is metered into an extruder and the mixture is melted and extruded via a film blowing die to give a film.

8. Process for the preparation of self-supporting blow molding hoses, **characterized in that** a mixture of a thermoplastic polyurethane and from 0.5 to 35 by weight, based on the thermoplastic polyurethane, of the processing aid according to Claims 1 to 4 is metered into an extruder and the mixture is melted and extruded via blow molding hoses.

## Patentansprüche

1. Verarbeitungshilfsmittel, umfassend
a) 10 bis 50 Gew.-% hydrophobierter, mindestens teilweise aggregierter Metalloxidteilchen
b) 20 bis 75 Gew.-% eines oder mehrerer thermoplastischer Polyurethane,
c) 0,5 bis 50 Gew.-% eines oder mehrerer Präpolymere, die Isocyanatgruppen umfassen,
wobei die Summe der Bestandteile a) bis c) basierend auf dem Verarbeitungshilfsmittel mindestens 80 Gew.-% beträgt.

2. Verarbeitungshilfsmittel nach Anspruch 1,
**dadurch gekennzeichnet, dass**
es ferner bis zu 5 Gew.-% eines oder mehrerer Polyisocyanate umfasst.

3. Verarbeitungshilfsmittel nach Anspruch 1 oder 2,
**dadurch gekennzeichnet, dass**
es ferner bis zu 15 Gew.-% einer oder mehrerer Verbindungen umfasst, die ausgewählt sind aus der Gruppe, bestehend aus Schmiermitteln, Dispergiermitteln und/oder Weichmacher.

4. Verarbeitungshilfsmittel nach Anspruch 1 bis 3,
**dadurch gekennzeichnet, dass**
die hydrophobierten Metalloxidteilchen hydrophobierte Siliciumdioxidteilchen sind.

5. Verfahren zur Herstellung des Verarbeitungshilfsmittels nach Anspruch 1 bis 4,
**dadurch gekennzeichnet, dass**
eine Mischung einer Schmelze eines thermoplastischen Polyurethans und hydrophobierter Metalloxidteilchen und eines oder mehrerer Präpolymere, die Isocyanatgruppen umfassen, wahlweise eines oder mehrerer Isocyanate und wahlweise eines oder mehrerer Schmiermittel, Dispergiermittel oder Weichmacher in einen Extruder oder eine Spritzgießvorrichtung dosiert wird.

6. Verwendung des Verarbeitungshilfsmittels nach Anspruch 1 bis 4 bei der Verarbeitung von thermoplastischen Polyurethanen, um Folien, Schläuche, Kabelummantelungen, Spritzgussteile oder Fasern zu erzeugen.

7. Verfahren zur Herstellung einer selbsttragenden Folie, **dadurch gekennzeichnet, dass** eine Mischung eines thermoplastischen Polyurethans und, basierend auf dem thermoplastischen Polyurethan, von 0,5 bis 35 Gew.-% des Verarbeitungshilfsmittels nach Anspruch 1 bis 4 in einen Extruder dosiert wird und die Mischung geschmolzen und durch eine Folienblasdüse extrudiert wird, um eine Folie zu erzeugen.

8. Verfahren zur Herstellung selbsttragender Blasformschläuche, **dadurch gekennzeichnet, dass** eine Mischung eines thermoplastischen Polyurethans und, basierend auf dem thermoplastischen Polyurethan, von 0,5 bis 35 Gew.-% des Verarbeitungshilfsmittels nach Anspruch 1 bis 4 in einen Extruder dosiert wird und die Mischung geschmolzen und durch Blasformschläuche extrudiert wird.

## Revendications

1. Adjuvant d'aide au traitement comprenant
a) 10-50 % en poids de particules d'oxyde métallique rendues hydrophobes, au moins partiellement agrégées,
b) 20-75 % en poids d'un ou plusieurs polyuréthanes thermoplastiques,
c) 0,5-50 % en poids d'un ou plusieurs prépolymères comprenant des groupes isocyanate,
la somme des constituants a) à c) représentant au moins 80 % en poids, relativement à l'adjuvant d'aide au traitement.

2. Adjuvant d'aide au traitement selon la revendication 1, **caractérisé en ce qu'**il comprend en outre jusqu'à 5 % en poids d'un ou plusieurs polyisocyanates.

3. Adjuvant d'aide au traitement selon la revendication 1 ou 2, **caractérisé en ce qu'**il comprend en outre jusqu'à 15 % en poids d'un ou plusieurs composés sélectionnés dans le groupe constitué de lubrifiants, de dispersants et/ou de plastifiants.

4. Adjuvant d'aide au traitement selon les revendications 1 à 3, **caractérisé en ce que** les particules d'oxyde métallique rendues hydrophobes sont des particules de dioxyde de silicium rendues hydrophobes.

5. Procédé de préparation de l'adjuvant d'aide au traitement selon les revendications 1 à 4, **caractérisé en ce qu'**un mélange à l'état fondu d'un polyuréthane thermoplastique et de particules d'oxyde métallique rendues hydrophobes et d'un ou plusieurs prépolymères comprenant des groupes isocyanate, éventuellement un ou plusieurs isocyanates et éventuellement un ou plusieurs lubrifiants, dispersants ou plastifiants, est introduit par l'intermédiaire d'un dispositif de dosage dans une extrudeuse ou dans un dispositif de moulage par injection.

6. Utilisation de l'adjuvant d'aide au traitement selon les revendications 1 à 4 dans le traitement de polyuréthanes thermoplastiques pour produire des films, des tuyaux, des gaines de câbles, des moulages par injection ou des fibres.

7. Procédé de préparation d'un film autoportant, **caractérisé en ce qu'**un mélange d'un polyuréthane thermoplastique et de 0,5 % à 35 % en poids, relativement au polyuréthane thermoplastique, de l'adjuvant d'aide au traitement selon les revendications 1 à 4, est introduit par l'intermédiaire d'un dispositif de dosage dans une extrudeuse et **en ce que** le mélange est fondu et extrudé par l'intermédiaire d'une filière de soufflage de films pour produire un film.

8. Procédé de préparation de tuyaux de moulage par soufflage autoportants, **caractérisé en ce qu'**un mélange d'un polyuréthane thermoplastique et de 0,5 % à 35 % en poids, relativement au polyuréthane thermoplastique, de l'adjuvant d'aide au traitement selon les revendications 1 à 4, est introduit par l'intermédiaire d'un dispositif de dosage dans une extrudeuse et **en ce que** le mélange est fondu et extrudé par l'intermédiaire de tuyaux de moulage par soufflage.
